# EUROPEAN PATENT APPLICATION

(11) **EP 4 697 769 A1**
(43) Date of publication of application: **18.02.2026**
(21) Application number: 24807570.7
(22) Date of filing: 16.05.2024
(51) Int. Cl.: H04W 8/24, H04W 8/20, H04L 67/303

(54) **METHOD AND APPARATUS FOR PROCESSING UPON DELAY IN PROVISIONING LARGE NUMBER OF PROFILES IN WIRELESS COMMUNICATION SYSTEM**

(30) Priority: 16.05.2023 KR 20230063101
(71) Applicant: Samsung Electronics Co., Ltd., Suwon-si, Gyeonggi-do 16677 (KR)
(72) Inventor: KANG, Sujung, Suwon-si, Gyeonggi-do 16677 (KR); YOON, Kangjin, Suwon-si, Gyeonggi-do 16677 (KR)
(74) Representative: Gulde & Partner
(86) International application number: PCT/KR2024/006647
(87) International publication number: WO 2024/237699

(57) **Abstract**

The present disclosure relates to a 5G or 6G communication system for supporting higher data transmission rates. According to the present disclosure, a method performed by a profile server for providing a profile to be provisioned to an embedded universal integrated circuit card (eUICC) may comprise the steps of: receiving, from a terminal manufacturer server, a request for providing a plurality of bound profile packages (BPPs); determining whether delay processing occurs when the BPPs are generated according to the request for providing the plurality of BPPs; generating the requested BPPs and transmitting same to the terminal manufacturer server when delay processing does not occur when the BPPs are generated according to the request for providing the plurality of BPPs; and transmitting processing comeback time information of the processing of the request for providing the plurality of BPPs to the terminal manufacturer server when it is determined that delay processing will occur when the BPPs are generated according to the request for providing the plurality of BPPs.

## Description

### [Technical Field]

The disclosure relates to a method and an apparatus for provisioning a profile in a wireless communication system. Specifically, the disclosure relates to a method and an apparatus in which a terminal manufacturer server requests, from a profile server, a large number of profiles to be provisioned to embedded universal integrated circuit cards (eUICCs) of a terminal, and provides a processing result thereof.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

A technical subject to be achieved by the disclosure is to provide an apparatus and a method capable of effectively providing services in a wireless communication system.

An aspect of the disclosure is to support an operation of provisioning and installing a profile onto a terminal in a factory.

### [Technical Solution]

According to one of various embodiments of the disclosure, a method performed by a profile server for providing a profile to be provisioned to an embedded universal integrated circuit card (eUICC) may include receiving, from a terminal manufacturer server, a providing request for a plurality of bound profile packages (BPPs), determining whether delayed processing occurs during BPP generation according to the providing request for the plurality of BPPs, generating the requested BPPs and transmitting the generated BPPs to the terminal manufacturer server in case that delayed processing does not occur during BPP generation according to the providing request for the plurality of BPPs, and transmitting, to the terminal manufacturer server, information on a processing time limit (comeback time) of processing of the providing request for the plurality of BPPs in case that it is determined that delayed processing occurs during BPP generation according to the providing request for the plurality of BPPs.

The method by the profile server may further include, in case that it is determined that delayed processing occurs during BPP generation according to the providing request for the plurality of BPPs, generating only some of BPPs corresponding to the providing request for the plurality of BPPs and transmitting the generated BPPs to the terminal manufacturer server.

The providing request for the plurality of BPPs may include information indicating that transmission of some of the requested BPPs is allowed.

The method by the profile server may further include, in case that an access request from the terminal manufacturer is received before expiration of the processing time limit, transmitting, to the terminal manufacturer, at least one of an error message, some BPPs having been generated among the requested BPPs to be generated, or a remaining time until completion of generation of all the requested BPPs to be generated.

The method by the profile server may further include, in case that an access request from the terminal manufacturer is received after expiration of the processing time limit, transmitting, to the terminal manufacturer, BPPs not previously transmitted to the terminal manufacturer among the BPPs having been generated.

The providing request for the BPPs, received from the terminal manufacturer server, may include information indicating that the providing request is a request for BPPs for in-factory profile provisioning (IFPP).

The method by the profile server may further include receiving, from the terminal manufacturer server, a request for information on BPP generation capability, and transmitting, to the terminal manufacturer server, information on BPP generation capability of the profile server.

According to another one of various embodiments of the disclosure, a method performed by a terminal manufacturer server for performing profile provisioning to an embedded universal integrated circuit card (eUICC) may include transmitting, to a profile server, a providing request for a plurality of bound profile packages (BPPs), receiving, from the profile server, information on a processing time limit (comeback time) of processing of the providing request for the plurality of BPPs, and after expiration of the processing time limit, accessing the profile server to receive the requested BPPs.

According to another one of various embodiments of the disclosure, a profile server for providing a profile to be provisioned to an embedded universal integrated circuit card (eUICC) may include a communication unit, and a controller, and the controller is configured to receive, from a terminal manufacturer server, a providing request for a plurality of bound profile packages (BPPs), determine whether delayed processing occurs during BPP generation according to the providing request for the plurality of BPPs, generate the requested BPPs and transmit the generated BPPs to the terminal manufacturer server in case that delayed processing does not occur during BPP generation according to the providing request for the plurality of BPPs, and transmit, to the terminal manufacturer server, information on a processing time limit (comeback time) of processing of the providing request for the plurality of BPPs in case that it is determined that delayed processing occurs during BPP generation according to the providing request for the plurality of BPPs.

### [Advantageous Effects]

Various embodiments of the disclosure can provide an apparatus and a method capable of effectively providing services in a mobile communication system.

According to various embodiments of the disclosure, the efficiency of processing a large number of profiles by a profile server can be increased.

Advantageous effects obtainable from the disclosure may not be limited to the above-mentioned effects, and other effects which are not mentioned herein may be clearly understood from the following description by those skilled in the art to which the disclosure pertains.

### [Description of Drawings]

FIG. 1 illustrates the relationship between components for provisioning a profile according to an embodiment of the disclosure.
FIGS. 2A and 2B are exemplary diagrams illustrating a process in which a factory IT server/OEM requests a profile from a profile server/server vendor and receives the profile, according to an embodiment of the disclosure.
FIG. 3 is an exemplary diagram illustrating a procedure in which a factory IT/OEM requests a large number of profiles from a profile server/server vendor according to an embodiment of the disclosure.
FIG. 4 is an exemplary diagram illustrating a determination of a profile server according to an embodiment of the disclosure (when a request for BPPs including otPK.EUCC.KA is received).
FIG. 5 is an exemplary diagram illustrating a determination of a profile server according to an embodiment of the disclosure.
FIG. 6 is an exemplary diagram illustrating a determination of a profile server according to an embodiment of the disclosure (when a request for BPPs not including otPK.EUCC.KA is received).
FIG. 7 is an exemplary diagram illustrating a determination of a factory IT/OEM according to an embodiment of the disclosure.
FIG. 8 is an exemplary diagram illustrating a determination of a factory IT/OEM according to an embodiment of the disclosure.
FIG. 9 is a block diagram illustrating structures of a profile server, a factory IT, and a UE in a wireless communication system according to an embodiment of the disclosure.

### [Mode for Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, or a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

In the following description, some of terms and names defined in the remote SIM provisioning (RSP) standards (SDP.XX series), which are standards specified by the global system for mobile communication association, GSM association) group among the existing eSIM standards, are used for the sake of descriptive convenience. However, the disclosure is not limited to above-mentioned terms and names, and may be equally applied to eSIMs that follow other specifications. A universal integrated circuit card (UICC) is a smart card used by being inserted into a terminal, such as a mobile communication terminal, and is also referred to as a UICC card. The UICC may include an access control module for accessing a network of a mobile communication service provider. Examples of such access control modules include a universal subscriber identity module (USIM), a subscriber identity module (SIM), and an Internet protocol (IP) multimedia service identity module (ISIM).

In accordance with the above discussion, the disclosure is to provide a method and a device for installing profiles in an eUICC of a terminal in a manufacturer terminal factory environment in a wireless communication system.

The disclosure may provide a method and an apparatus for effectively providing a single eUICC with results of processing profiles one or more times in a terminal manufacturer factory environment in a wireless communication system.

A UICC including a USIM is also commonly referred to as a USIM card. Likewise, UICC including a SIM module is also commonly referred to as a SIM card. It should be noted that, as used in a general sense, the term "SIM card" in the following description may cover a UICC card, a USIM card, a UICC including an ISIM, etc. It is obvious that even if a SIM card is mentioned in the disclosure, the technical applications thereof may be also applied to a USIM card, an ISIM card, or a general UICC card in the same way.

A SIM card stores personal information of a mobile communication subscriber, and performs subscriber authentication and generation of a traffic security key at the time of access to a mobile communication network, so as to enable use of secure mobile communication.

A SIM card is generally manufactured as a dedicated card for a specific mobile communication operator at the operator's request, and authentication information for accessing the operator's network, for example, a universal subscriber identity module (USIM) application, an international mobile subscriber identity (IMSI), a K value, an operator constant (OPc) value, etc. are preloaded on the card for shipment. Therefore, the manufactured SIM card is delivered to a mobile communication operator and provided to subscribers, and thereafter, if necessary, management of applications within the UICC, such as installation, modification, or deletion, may be performed using an over-the-air (OTA) technology.

A subscriber can use a mobile communication operator's network and application services by inserting a UICC card into a mobile communication terminal owned by the subscriber. In addition, the subscriber can move and insert the UICC card from the existing mobile communication terminal to the new mobile communication terminal when replacing the mobile communication terminal, and thereby the authentication information, mobile communication telephone number, and personal address book stored in the UICC card can be used as is in the new mobile communication terminal.

However, the SIM card may cause inconvenience for a mobile communication terminal user who wishes to receive services provided by a different mobile carrier. The mobile communication terminal user may experience inconvenience in that a physical SIM card should be obtained from a mobile communication operator to receive a service. For example, there may be inconvenience in that a local SIM card should be purchased in order to receive a local mobile communication service while traveling to another country. Roaming services may resolve some of the inconveniences to a certain extent, but there may be a problem in that a service is unavailable in case of high charges or when no contract exists between carriers.

In the case of remote downloading and installing a SIM module to a UICC card, the inconvenience described above may be resolved to a large extent. For example, a SIM module for a mobile communication service to be used at a time point desired by the user may be downloaded to the UICC card. In addition, the UICC card may download and install multiple SIM modules, and may select and use at least one of the multiple SIM modules. The UICC card may be fixed in a terminal or may not be fixed. A UICC fixed and used in a terminal is generally referred to as an eUICC, and in the disclosure, a UICC card capable of downloading and selecting a SIM module remotely may be collectively referred to as an eUICC. That is, the term eUICC may be used to collectively refer to a UICC card fixed to a terminal and a UICC card not fixed to a terminal among UICC cards that are capable of remotely downloading and selecting a SIM module. In addition, the SIM module information to be downloaded may be collectively referred to as "profile." Depending on the purpose, profiles may be further classified into a provisioning profile, which is a restricted-use profile for connectivity for initial configuration (e.g., allowing only profile server access), an operational profile having no use restriction, and a test profile limited for use in testing, for example. The provisioning profile may be used as a term called bootstrap profile.

In general, installation of a profile in the eUICC is assumed to be performed after the terminal is shipped, assuming that a terminal user downloads a profile from a profile download server through a real-time connection with a network. Currently, according to the remote profile provisioning standards defined by the GSMA, such as the remote SIM provisioning standards for consumer-oriented terminals SGP.21/22, the remote SIM provisioning standards for IoT-oriented terminals SGP.31/32, and the remote SIM provisioning standards for M2M-oriented terminals SGP.01/02, a terminal is defined as being connected in real time via a network to a profile download server, exchanging multiple messages with the profile server, performing common mutual authentication during the process, and then downloading a profile. However, a terminal may not always be assumed to be in a state of being connected to a network when downloading a profile from a profile download server. Accordingly, to address this, a provisioning profile, which is a restricted-use profile for providing only connectivity for initial configuration to a terminal, was introduced in SGP.21/22. Accordingly, the terminal manufacturer may ship an eUICC having a provisioning profile embedded therein. In addition, it may also be possible that, under a contract with a service provider, a manufacturer pre-installs an unrestricted operational profile of a mobile network operator in the eUICC prior to shipment.

Meanwhile, a new work item for provisioning a profile to a terminal in a factory was recently approved by the GSM Association (GSMA, a global association of mobile network operators), and standardization discussions on apparatuses and methods for provisioning a profile to a terminal in a factory are expected to be conducted under SGP.41 (technical requirements specification) and SGP.42 (technical specification, to be developed).

In the disclosure, the function of provisioning a profile in a factory is referred to as an in-factory profile provisioning (IFPP) function, and entering a state in which the IFPP function is supported may be indicated as entering an IFPP mode or an IFPP state. Alternatively, "f" may be added to the end of the name of each entity to indicate that the entity is in a state of operating in the IFPP mode. For example, as a specific entity, a terminal, a local profile assistant (LPA), an eUICC, a profile server, a factory IT, a service provider (SP) server, and an eUICC manufacturer (EUM) server may be an entity that further supports the IFPP mode, or may be an entity that supports only the IFPP function. For example, a profile server such as SM-DP+ may support a consumer-oriented remote SIM provisioning function defined in SGP.21/22, and may additionally support some of the IFPP functions defined in SGP.41/42. Alternatively, the profile server SM-DP+ may be a profile server that supports only the IFPP function. A profile server operating in an IFPP state may be denoted, in the disclosure, as, for example, a profile server-f or SM-DPf.

In the disclosure, a universal integrated circuit card (UICC) may refer to a smart card inserted into and used in a mobile communication terminal, in which a subscriber's network access authentication information, a phone book, and personal information such as a short message service (SMS) are stored, and which performs subscriber authentication and traffic security key generation when accessing a mobile communication system such as a GSM, wideband code division multiple access (WCDMA), LTE, 5G, etc., so as to enable safe use of the mobile communication. A UICC may have a communication application such as a subscriber identification module (SIM), a universal SIM (USIM), or an IP multimedia SIM (ISIM) according to the type of a mobile communication network to which a subscriber accesses, and may also provide a higher-level security function for loading various applications such as an electronic wallet, ticketing, and an electronic passport.

In the disclosure, the embedded UICC (eUICC) is not limited to a secure module embedded in a terminal, and may include a removable secure module that can be inserted into and removed from the terminal. The eUICC may install a profile by downloading the same in real time or non-real time through a wired or wireless network. The eUICC may be named as a UICC capable of profile downloading and installation. In a factory environment where the eUICC has difficulty in real-time communication with the outside, the SM-DPf server that has generated a profile may install the profile onto a terminal via a device used by the factory IT/original equipment manufacturer (OEM), the device being configure to provision a profile to the eUICC in a wired or wireless manner.

The method of downloading and installing a profile on an eUICC in the disclosure may be applied to a removable UICC that can be inserted into and removed from a terminal, as described above. For example, an embodiment of the disclosure may be applied to a removable UICC capable of downloading and installing a profile. In the disclosure, an eUICC unique identification number (eUICC ID) may be referred to as an EID. In the disclosure, the term UICC may be used interchangeably with the term SIM, and the term eUICC may be used interchangeably with the term eSIM.

In the disclosure, a profile may refer to a software package of an application, a file system, authentication key values, and the like stored in a UICC. In addition, a profile may be named as access information. In addition, a USIM profile in the disclosure may refer to a profile having the same meaning as the profile, or a software package including information in a USIM application in the profile. In the disclosure, a profile package or an encrypted profile package (bound profile package, BPP) may be used interchangeably with the term indicating a profile or used as the term indicating a data object of a specific profile, and may be referred to as a profile tag, length, and value (TLV) or a profile package TLV. The profile identifier may be referred to as an integrated circuit card identifier (ICCID) indicating a unique identification number of the profile. In case that the profile package is encrypted by using encryption parameters, the encrypted profile package may be referred to as a protected profile package (PPP) or a protected profile package TLV (PPP TLV). In case that the profile package is encrypted by using an encryption parameter that is decryptable only by a specific eUICC, the profile package may be referred to as a bound profile package (BPP) or a bound profile package TLV (BPP TLV). The profile package TLV may be a data set that expresses information constituting a profile in the form of a tag, length, and value (TLV).

In the disclosure, a profile server may be a server providing a function of generating a profile, encrypting the generated profile, storing the generated profile, generating a profile remote management command, encrypting the generated profile remote management command, or providing an IFPP mode, and may be expressed as a subscription manager data preparation (SM-DP), subscription manager data preparation plus (SM-DP+), or subscription manager secure routing (SM-SR). As mentioned above, a profile server providing the IFPP function in the disclosure may be expressed as an SM-DPf.

As used in the disclosure, the terms "terminal" or "device" may be used interchangeably with a mobile station (MS), a user equipment (UE), a mobile equipment (ME), a user terminal (UT), a wireless terminal, an access terminal (AT), a terminal a subscriber unit, a subscriber station (SS), a wireless device, a wireless communication device, a wireless transmit/receive unit (WTRU), a mobile node, a mobile, or other terms. Various embodiments of a terminal may include cellular phones, smartphones having wireless communication functions, personal digital assistants (PDAs) having wireless communication functions, wireless modems, portable computers having wireless communication functions, capturing devices such as digital cameras having wireless communication functions, gaming devices having wireless communication functions, music storage and playback appliances having wireless communication functions, Internet appliances having wireless Internet access and browsing capabilities, and portable units or terminals integrating combinations of such functions. In addition, a terminal may include a machine to machine (M2M) terminal, a machine type communication (MTC) terminal/device, or an IoT terminal/device according to a supported performance feature. In the disclosure, a terminal may also be referred to as an electronic device or a device. A UE 120 that provides a function of installing a profile in an eUICC may be referred to as an eSIM terminal.

In the disclosure, an EUM refers to an eUICC manufacturer who produces an eUICC, personalizes the eUICC and provides the same, and information transmitted from the EUM may be transmitted online or offline through a channel between an EUM server or separate components. According to an embodiment of the disclosure, the EUM may refer to the EUM server or the role performed in the EUM.

The terminal or device in the disclosure may include software or applications installed in the terminal or device to control a UICC or eUICC. The software or application may be an application such as, for example, a local profile assistant (LPA), a SIM manager, or an IoT profile assistant (IPA). The software or functions may be provided as an integrated one. For example, the LPA and IPA may be provided as one integrated app. In the disclosure, a software or application installed in a terminal or device to control a UICC or eUICC, when operating with an IFPP function, may be collectively referred to as FPA or LPAf.

An application protocol data unit (APDU) in the disclosure may be a message or in the form of a message exchanged between a controller in a terminal or device and an eUICC. An APDU is a pair of a command and a response, and the APDU command and the APDU response may be defined in ETSI 102.221 with reference to ISO 7816. As defined in ETSI 102.221, an APDU command has a structure including a header of an APDU. The header includes a class of instruction (CLA), an instruction (INS), an instruction parameter 1 (P1), and an instruction parameter 2 (P2). The body includes a number of bytes in the command data field (Lc), data, and a number of bytes expected in response to the command (Le), and an APDU response has a structure including an optional data field, a status byte 1 (SW1), and a status byte 2 (SW2). A detailed description thereof may refer to the ETSI 102.221 standard. An application message transmitted by the LPA or terminal may be transmitted to the eUICC in the form of an APDU, and information transmitted at this time may be transmitted by being included in data of the APDU.

In the disclosure, AKA may indicate authentication and key agreement, and may indicate an authentication algorithm for accessing a 3GPP or 3GPP2 network. K is a cipher key value stored in an eUICC and used in an AKA authentication algorithm, and OPc may be a parameter value storable in an eUICC and used in an AKA authentication algorithm in the disclosure.

In the disclosure, a NAA is a network access application, which is an application program stored in a UICC, and may be an application program such as a USIM or ISIM for accessing a network. The NAA may be a network access module.

In the disclosure, an end user, a user, a subscriber, a service subscriber, and a user may be interchangeably used as a user of a terminal.

In the disclosure, factory IT may refer to a device that performs a role of provisioning specific data or settings to a terminal during a manufacturing process, and may refer to a module including a function of downloading a profile to the terminal. The factory IT may further include a function of acquiring and storing profiles from a profile server, and may also be a device that performs a role of collecting profile processing results and delivering the same. The factory IT may be used interchangeably with factory IT equipment, a factory IT server, a factory provisioning equipment, a factory server, an OEM, or a terminal manufacturer server. However, even if the factory IT is expressed as a server in the following description, the factory IT in the disclosure may be configured by one or more modules, for example, a server for acquiring, collecting, storing, or processing data and transmitting the processed data, or a terminal for, at an eSIM terminal or contact point, performing settings, provisioning data, or acquiring a processing result.

In the disclosure, the OEM may be interchangeably used with a terminal manufacturer or a manufacturer. In the disclosure, some of the various devices of the OEM may be wirelessly connected only within the manufacturer by wired or wireless means and may not allow access to an external network. For example, a data storage server used for a manufacturing process or communication devices for provisioning a profile to a terminal may be connected only to an in-house network without providing a network connection to the outside of the manufacturer. A storage server of profiles inside the manufacturer may be the same device as a server that returns a profile BPP loading report to the outside, or may be a different device. In the disclosure, factory IT/OEM may be described as one or more devices that install a profile into a terminal in a factory of the manufacturer and return a BPP loading report.

In the disclosure, a BPP loading report, a profile loading report, and a profile loading report may be described as a report generated by a terminal manufacturer by collecting processing results that are generated and returned by an eUICC after the terminal manufacturer has performed, in a terminal, installation, deletion, or other processing of profiles acquired from an SM-DPf.

In the disclosure, a profile order ID is an identification ID for specific profile orders, which may be generated by a profile server vendor at the request of a communication service provider or at the request of a profile order of the communication service provider, and shared with a terminal manufacturer. The profile order ID is defined as a value that is unique between an MSP and an SM-DPf, and may be used by the SM-DPf to determine which profile mapped to a particular order is requested by the terminal manufacturer presenting the corresponding profile order ID. For example, a profile order ID may be represented in hexadecimal as a combination of 0-9, A-Z, and "-". In the disclosure, the service provider (SP) may be interchangeably used with a mobile service operator (MSP), a mobile network operator (MNO), a mobile network provider, a provider, a telecom company, or an (M)SP server, and may mean a server of the service provider or a role performed by the service provider, depending on an embodiment. In the disclosure, although a profile order ID may later be defined in a standard as a bundle ID, order identification information, or other terms, the disclosure uses the uniformly uses the term "profile order ID".

In the disclosure, the terms "processing period", "processing time limit", "comebackTime", and "comeback time" refer to a time required by the profile server to process a large number of profiles requested by the factory IT/OEM, and also indicate a time limit by which the factory IT/OEM may re-access and obtain all the requested profiles. When it is difficult to process such a large number of profiles, the profile server may provide the factory IT/OEM with information indicating a time by which the requested profiles can be generated and returned.

The terms "processing period", "processing time limit", "comebackTime", and "comeback time" may be represented in a format such as YYYY-MM-DDThh:mm:ssTZD defined in ISO 8601 (where TZD indicates a time zone: Z, +hh:mm, or -hh:mm), and may be included in a message returned from a profile server. This may be included in the following Table 1 given as an example.

In the disclosure, the terms "remaining period", "remaining time limit", and "remaining Time" refer to a remaining time required for the profile server to process a large number of requested profiles. When a profile request is received before the comeback Time, the profile server may transmit the remaining time as supplementary information.

The terms "remaining period", "remaining time limit", and "remaining Time" may be represented in a format such as YYYY-MM-DDThh:mm:ssTZD defined in ISO 8601 (where TZD denotes a time zone: Z, +hh:mm, or -hh:mm), and may be included in a message returned from the profile server. This may be included in the following Table 1, for example.

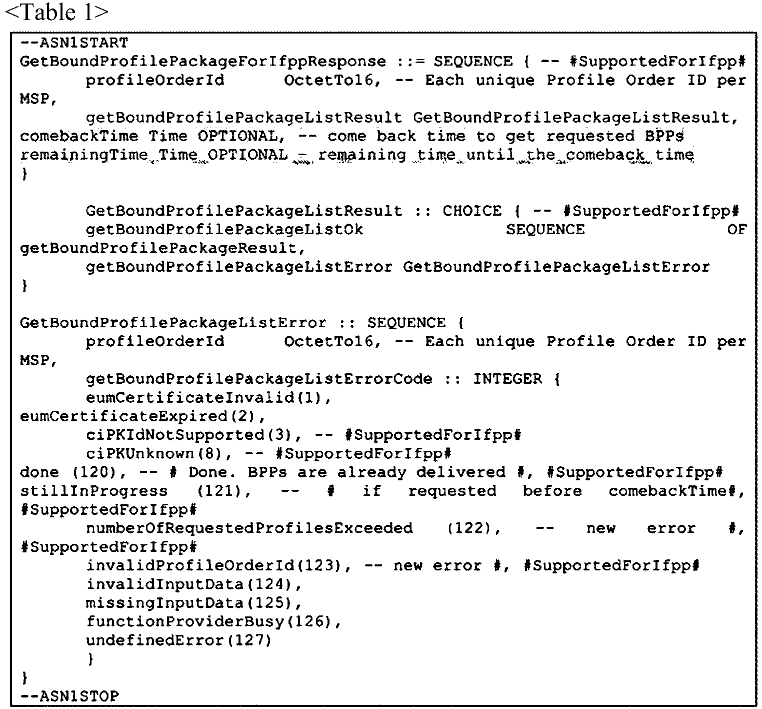

In the disclosure, a server vendor may refer to a vendor operating a profile server, and may refer to a role performed by the profile server vendor.

In the disclosure, the term "encryption key" is used to collectively refer to both encryption keys and decryption keys. For example, the private key used to encrypt data or the public key used to decrypt the same may be included, and the public key may be shared in the form of a certificate.

In the disclosure, otSK.EUICC.KA and otPK.EUICC.KA denote a one-time secret key (otSK) of the eUICC and a one-time public key (otPK) of the eUICC, respectively, as defined in SGP.22, and KA may indicate key agreement. In the disclosure, a one-time encryption key pair or a one-time eUICC key pair may refer to otSK.EUICC.KA and otPK.EUICC.KA. The term "secret key" is used interchangeably with "private key," and the term "public key" is used interchangeably with "open key".

In the disclosure, key material necessarily includes otPK.EUICC.KA, and may further be eUICC information including, for example, an eUICC certificate chain and capability information (eUICC info). The key material may represent cryptographic key data information for one-time profile installation for a specific eUICC. In the key material, otPK.EUICC.KA may be transmitted as signed data of the eUICC. In case that the signed data of the eUICC is transmitted, the profile server that generates a profile using the signed data may need to verify the signed data by identifying whether it has the same root of trust certificate. In the following description of the drawings, the term "key material" may be interchangeably used with "key information" or "encryption key information".

The disclosure provides a method and an apparatus for inserting a profile into a UE including an eUICC for shipment.

In particular, the disclosure is to provide a method and an apparatus for supporting a factory in requesting a large number of profiles and for enabling a profile server to provide the requested large number of profiles. In the current specifications SGP.22 to SGP.32, the method of transmitting a profile request operates on the assumption that the requests are processed and replied on a one-to-one basis based on a real-time connection between a profile server (SM-DP+) and a terminal, and operates without considering a delay situation. According to such a method of transmitting a profile request, it is not possible to efficiently obtain and deliver the results of processing a large number of profiles.

According to various embodiments of the disclosure, a terminal manufacturer may receive a large number of profiles through a connection with a profile server, and pre-install the profiles in an eSIM terminal for shipment, even without maintaining a real-time connection between the profile server and the terminal.

In addition, according to various embodiments of the disclosure, the user may immediately access a network by purchasing a terminal in which a profile has already been installed, so that the user may be relieved of the inconvenience of having to find a Wi-Fi or mobile communication network to download the profile, thereby increasing the user's convenience.

In addition, according to various embodiments of the disclosure, since a communication service operator may provide a terminal to a user in a state in which a provisioning profile for downloading the operator's profile or an operational profile for directly using the operator's network service is installed, thereby improving user convenience in using an eSIM.

The following embodiments describe procedures for provisioning a profile in a factory prior to shipment. However, it should be noted that, after shipment from the factory, a user of the terminal may also provision and install a profile in a general user environment outside the factory in accordance with procedures defined in SGP.21/22. In other words, the following embodiments are intended to describe provisioning in a factory installation environment, and it is to be clearly understood that this does not mean that profile installation in a general environment after shipment from the factory is impossible.

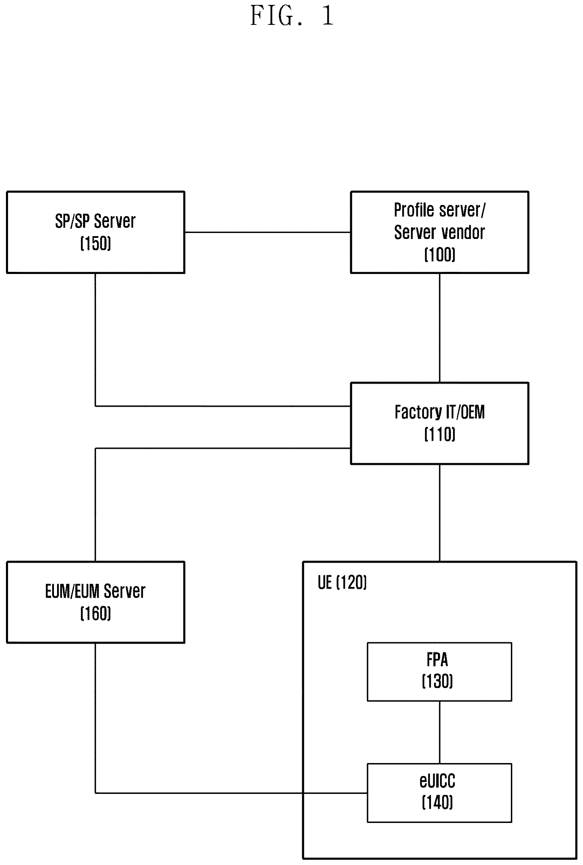

FIG. 1 illustrates a relationship between components for supporting in-factory profile provisioning according to an embodiment of the disclosure.

Referring to FIG. 1, a profile server/server vendor (hereinafter, may be referred to as a profile server or a server vendor) 100 may support a function of generating a profile for the IFPP, storing a profile generated for the IFPP, or encrypting a profile generated for the IFPP. In addition, the profile server may further support a function of generating a profile to be generally used in the field, as defined in SGP.22. The profile server/server vendor 100 may support the function of storing the generated profile. The profile server/server vendor 100 may provide a function of encrypting the generated profile. The profile server/server vendor 100 may include the function of generating a remote profile management (RPM) command, or the function of encrypting the generated profile remote management command. The profile server/server vendor 100 may support a function of transmitting the generated profile to the eSIM UE or another profile storage server. RPM may generally refer to a series of procedures in which profile installation, activation, deactivation, deletion, and other functions are performed by a command transmitted from the profile server/server vendor 100 to a UE 120. The RPM command may be requested by a communication operator, a service provider, or a UE owner, and may be generated by the profile server/server vendor 100.

The profile server/server vendor 100 may receive a profile order request from a service provider (SP)/SP server (hereinafter, referred to as an SP or an SP server) 150, and may determine whether the request is for profile generation for the IFPP. The profile server/server vendor 100 may also prepare in advance profile order information received from the factory IT server/OEM (hereinafter, referred to as a factory IT, a factory server, or an OEM) 110 or the SP/SP server 150, by combining the same with EID information of the order (mapping the profile to the EID). The SP/SP server 150 may receive a profile order request from the factory IT server/OEM 110, and may determine whether the request is a request for provision order for profiles for the IFPP. After the determination, the SP/SP server 150 may place a provision order for the profiles with the profile server/server vendor 100, thereby enabling the profile server/server vendor 100 to provide one or more bound profile packages (BPPs) to the factory IT/OEM 110.

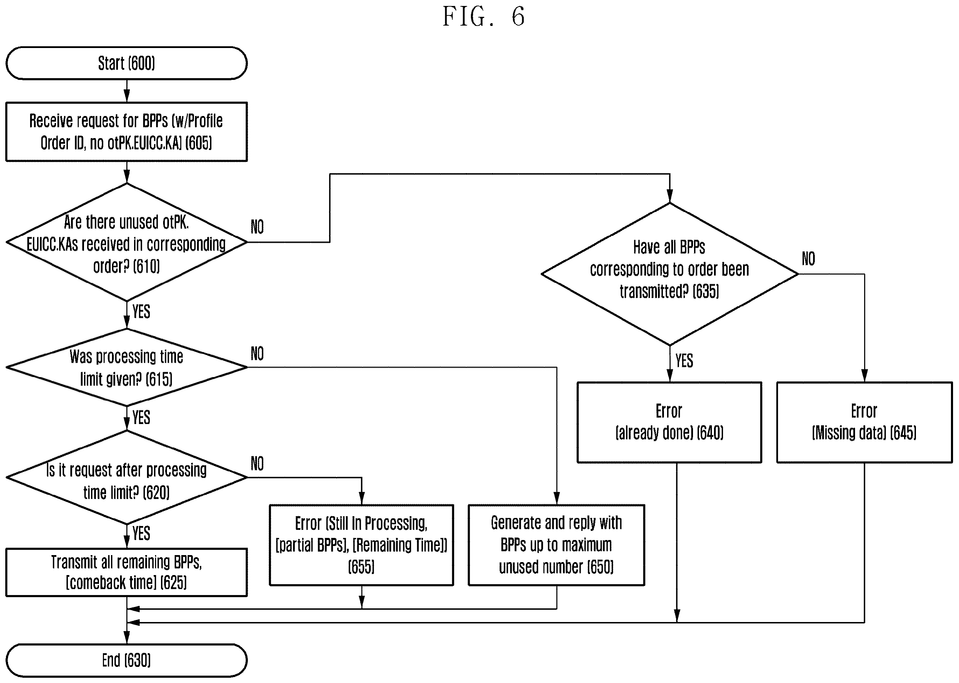

The UE 120 may include an eUICC 140 and a communication modem (not illustrated). One or more baseband processors (hereinafter, baseband) for wireless communication may be mounted in a communication modem. The communication modem may be referred to as a communication unit or a transceiver. The UE 120 may be provided with BPPs generated for IFPP from the factory IT/OEM 110, and may provide a function of installing the BPP(s) into the eUICC 140. The UE 120 may transmit the BPP to the eUICC 140 either via the FPA 130 or directly to the eUICC 140 without passing through the FPA 130. The transmitted messages may include, together with the BPP, specifically, parameters that are either included in the BPP or added to the BPP. This is described in detail in operation 675 of FIG. 6.

An example of methods for transmitting messages related to the installation of the BPP and the encryption key information transmitted to the eUICC using the FPA 130 may include transmitting such messages included in one or more ES10x messages, but is not limited thereto. In the case of transmission without going through the FPA, the messages may be transmitted as the body of data of an APDU, such as STORE DATA.

Meanwhile, although the profile server/server vendor 100 is expressed as one in FIG. 1, the profile server/server vendor 100 may include multiple profile servers/server vendors. The factory IT/OEM 110 may receive BPPs from the multiple profile servers/server vendors 100 and store the BPPs.

As described above, the FPA 130 may be eUICC control software or an application supporting the IFPP function. The FPA 130 may be implemented as a logical function of the UE 120 or the eUICC 140. The FPA 130 may receive profiles and additional authentication information for authenticating the profile server/server vendor 100 from the factory IT/OEM 110, and provide the same to the eUICC 140. The FPA 130 may perform a role of acquiring a profile installation result from the eUICC 140 and transmitting the same to the factory IT/OEM 110.

The eUICC 140 may determine that a request for profile installation in the factory has been made, based on one or more ES10x messages received from the FPA 130 or a profile installation message received through an application or software for the factory configuration of the factory IT 110 or the UE, and may determine to enter the IFPP mode. If the eUICC 140 does not support the IFPP function (for example, when it is unable to interpret the received function), the eUICC 140 may return an error and terminate the IFPP processing.

The eUICC 140 may process a request received through the FPA 130 and transmit a response. The eUICC 140 may obtain information for a profile and for authentication of the profile server/server vendor 100 from the UE 130, and may perform decryption of the profile by using pre-stored information for authentication, and may then process profile installation. The eUICC 140 may also return a result of the profile installation to the component that has transmitted the request, i.e., a specific application of the UE or the FPA 130 of the UE. In addition, the eUICC 140 may verify the profile server/server vendor 100 that has encrypted the profile by verifying a signature of a component that has signed the received message, or may perform authentication of the profile server/server vendor 100 that has transmitted the message. The eUICC 140 may include an embedded UICC controlling authority security domain (ECASD), which is a space for storing credentials required by the security domains of the eUICC 140, for example, a certificate issuer's root public key for verifying an SM-DPf (profile server/server vendor 100) certificate, a keyset of an eUICC manufacturer, and the like, and may further include an eSIM operation platform, and the like. In addition, a part of the functions of the FPA may be implemented in the eUICC 140.

The factory IT/OEM 110 may be configured to include one or more devices such as servers and PCs that perform a role of provisioning a profile to a UE in a factory. The factory IT/OEM 110 may acquire predetermined pieces of information on the eUICCs 140, including one-time encryption keys, from an EUM/EUM server (hereinafter, referred to as an EUM or EUM server) 160, and may transmit all or part of the acquired information to the profile server/server vendor 100, or transmit information for mapping an ordered EID and a profile to the SP/SP server 150. The factory IT/OEM 110 may be a server that stores or manages received encryption key information and BPPs. The factory IT/OEM 110 may request BPP(s) for provisioning in a factory from the profile server/server vendor 100, and, as a result of the request, may obtain, from the profile server/server vendor 100, BPPs to be installed in the eUICC 140 together with data signed by the profile server/server vendor 100. The factory IT/OEM 110 may store the received BPPs and the signed data therein. The factory IT/OEM 110 may select, among the received or stored BPPs, a BPP mapped to an EID of a target UE for profile installation, and transmit the selected BPP to the UE mapped thereto during a factory configuration process. The factory IT/OEM 110 may obtain the BPP processing result from the UE 120 through the FPA 130.

The factory IT/OEM 110 may be a server that plays a role of, for example, acquiring the received BPP processing result from the UE 120, storing the acquired result, processing the result to generate a BPP loading report, and delivering the generated report to the profile server/server vendor 100.

The factory IT/OEM 110, as described above, refers to operations performed by the terminal manufacturer or by the factory IT of the terminal manufacturer. Although expressed as a single entity in the drawings below, the factory IT/OEM may be configured by multiple devices (e.g., a server or a terminal such as a PC). Accordingly, for example, the device of within the factory IT/OEM 110 at the contact point for connecting BPPs to the profile server/server vendor 100 and the device of the factory IT/OEM 110 at the contact point for connecting to the eSIM UE 120 may be the same device or different devices. Some of the information exchanged between the factory IT/OEM 110 and the profile server/server vendor 100, the SP server 150, and the EUM 160 may be shared among entities (that is, the terminal manufacturer, the profile server operating vendor, the service provider, and the eUICC manufacturer) that perform roles in a different form, through other online or offline channels (for example, email transmission), rather than through message transmission and reception via server-to-server interfaces.

The eUICC manufacturer 160 may provide the terminal manufacturer with eUICCs 140 that have been personalized by provisioning, into the eUICCs 140, key information for credentials used in eUICC certification. The eUICC manufacturer (EUM) 160 may also provide the OEM/factory IT/OEM 110 with predetermined pieces of information on the eUICCs 140, including a one-time encryption key, from the eUICC manufacturer (EUM)/EUM server 160. In addition, although not illustrated in the drawing, at the request of the OEM 110, the eUICC manufacturer (EUM)/EUM server 160 may transmit predetermined pieces of information on the eUICCs 140, including a one-time encryption key, to the profile server/server vendor 100.

As described above, the service provider (SP) 150 is an operator that provides network services by using profiles. The SP/SP server 150 may request the profile server/server vendor 100 to generate and prepare profiles for the IFPP function by placing an order for the profiles with the profile server/server vendor 100. In addition, the SP/SP server 150 may generate a profile order ID and provide it to both the profile server/server vendor 100 and the OEM 110. Furthermore, the SP/SP server 150 may receive the profile processing result from the profile server/server vendor 100 and then perform additional management for the corresponding profiles.

Hereinafter, the description of the above-described configuration modules may also apply to the roles and relationships of the modules illustrated in the following drawings. In addition, the order information, as information exchanged among the profile server/server vendor 100, the factory IT server/OEM 110, the EUM/EUM server 160, and the SP/SP server 150 among the above-described configuration modules, may be transmitted via interworking through interfaces between servers of the respective entities, or in other forms such as e-mail.

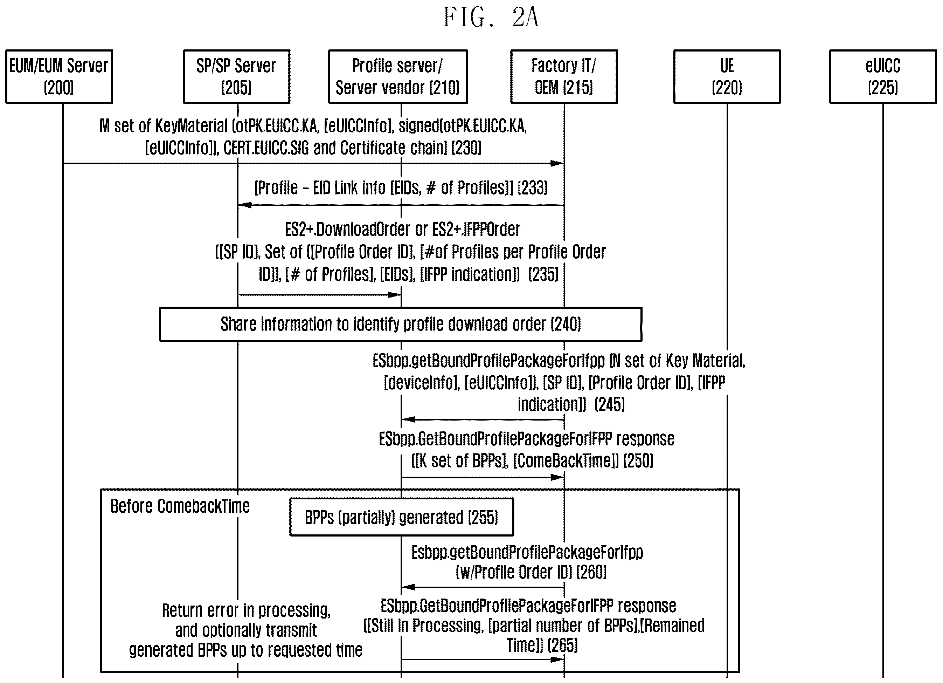

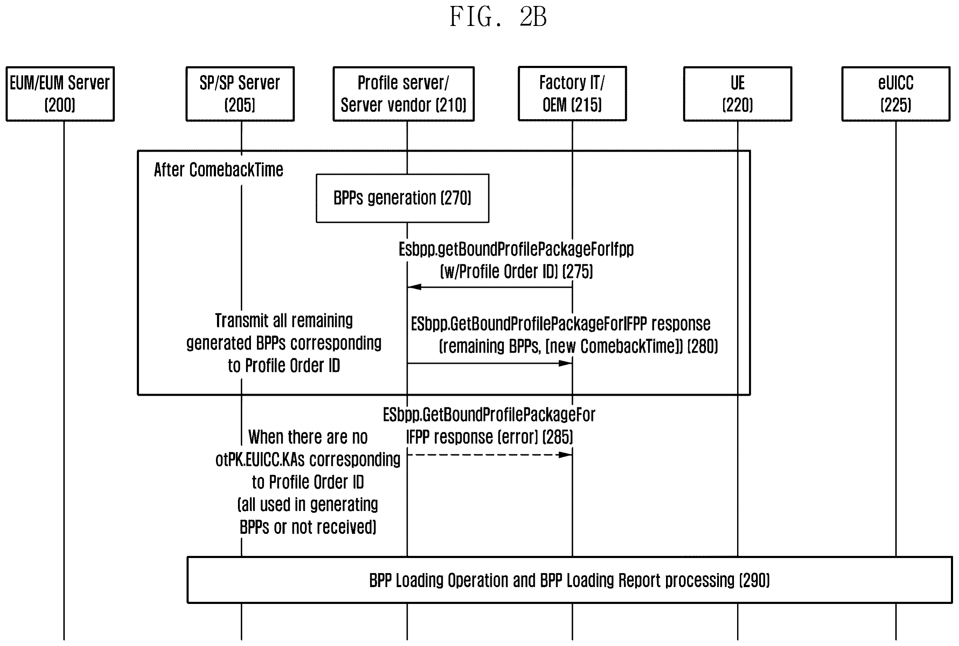

FIGS. 2A and 2B are exemplary diagrams illustrating a process in which a factory IT server/OEM 210 requests a profile from a profile server/server vendor 210 and receives the profile, according to an embodiment of the disclosure.

Referring to FIGS. 2A and 2B, a factory IT/OEM 215 that intends to mount eUICCs may place an order for the eUICCs with an EUM/EUM server 200. The EUM 200 may pre-generate a pair of otSK.eUICC.KA and PK.eUICC.KA used in the eUICC and transmit the pair to the factory IT/OEM 215 (operation 230). Upon delivery of the eUICCs equipped with otSK.eUICC.KA, the EUM 200 may transmit to the factory IT/OEM 215 at least one of the following for each eUICC: otPK.eUICC.KA, [eUICC info], [EID], data including the otPK.eUICC.KA signed with a private key of the EUM, a certificate of the eUICC (CERT.EUICC.SIG) and its certificate chain, EID, or PK.eUICC.KA (operation 230). The transmitted information may be delivered through an interface interworking with the factory IT 215 from the profile server. The transmitted information may be delivered either online or offline. Each piece of transmitted information may represent the following, but is not limited to the examples below and may also represent other types of information.
- otPK.EUICC.KA: a one-time public key of the eUICC
- a public key used for generating a session key between the profile server and the eUICC
- SK (data including otPK.EUICC.KA): data including otPK.EUICC.KA, which is signed with the secret key of the eUICC
- CERT.EUICC.SIG and certificate chain: an eUICC certificate and a chain of certificates for verifying the eUICC certificate.
- CERT.EUICC.SIG may include an EID, which is a unique identifier of the eUICC, and a public key (PK.EUICC.KA) for decrypting an eUICC signature, and may also be used to prove that the eUICC has been certified by an EUM.
- A higher-level certificate chain of CERT.EUICC.SIG may include CERT.EUM.SIG, which is a certificate including an EUM public key.
- eUICC info: information about the eUICC capability, which may or may not include an indication regarding whether the eUICC supports IFPP. When the same eUICC capability is used for a specific order, the eUICC info may be transmitted per order rather than per eUICC. As described above, the eUICC info may further include information for supporting the installation of multiple profiles and information on the method of supporting the installation of multiple profiles, and may be transmitted together therewith.
- EID: a unique identification number assigned to each eUICC.
- PK.EUICC.KA: a public key of the eUICC for decrypting an eUICC signature. If the EID or PK.EUICC.KA of the eUICC is transmitted, the value may be transmitted as included in CERT.EUICC.SIG, or may be transmitted as a separate parameter if not included in CERT.EUICC.SIG.

The factory IT/OEM 215 that has received the transmitted information may store the information, and at a specific time, the factory IT/OEM 215 may determine to install a profile in N or all of the M eUICCs ordered from the EUM 200. Alternatively, the SP/SP server 205 may request the factory IT/OEM 215 to pre-install the profiles to the UEs 220 to be shipped.

The factory IT/OEM 215 may, as an optional procedure, transmit to the SP/SP server 205 at least one of the number of profiles and information on the EID(s), so that the SP/SP server 205 is able to prepare, in advance, a profile linked to the EID (operation 233).

The SP/SP server 205 may place an order for a profile with the profile server/server vendor 210 (operation 235).

In case that the SP/SP server 205 has obtained EID lists in operation 333 or at a specific time point prior thereto, the SP/SP server 205 may place an order for a profile including EID information and deliver the order to the profile server/server vendor 210. The profile ordering message may be defined as a form that further includes IFPP order identification information in the ES2+ ordering interface between a service provider and a profile server defined in a new function or the existing GSMA RSP. The information included in the order message may include at least one of the following. It should be understood, however, that the information is not limited to the following examples, and the inclusion of other information is not excluded.
- A profile order ID indicating a bundle of the ordered profiles
- Number of profiles allocated per profile order ID or ICCID lists
- Number of order profiles
- ICCID(s)
- EID(s) for which a profile needs to be linked
- Service provider (SP) ID
- Profile server address (e.g., a FQDN type address) for preparing order profiles
- IFPP order identifier (IFPP indication)
- A factory IT serial number to which the generated BPP is to be transmitted
- OEM identification number (manufacturer number) for transmitting the generated BPP

The IFPP order identifier may be included in the value of the IFPP indication data and transmitted. Alternatively, the profile order ID may be included in one of the values of profile type data of the ES2+ ordering interface and transmitted.

The profile server/server vendor 210 may be a profile server that supports only IFPP, or may be a profile server that supports IFPP as one of the functions of the profile server. For example, the profile server/server vendor 210 may be a server supporting GSMA-defined SGP.21/22 (a standard for profile provisioning for consumer UEs such as smartphones). Alternatively, the profile server/server vendor 210 may be a server supporting SGP.31/32 (a standard for profile provisioning for loT-specific UEs). The profile server/server vendor 210 may further support functions for profile provisioning in a factory. The profile server/server vendor 210 that has received a profile download order may determine whether IFPP determination information is included in a new function defined as IFPPorder or in a new parameter of the existing ES2+ DownloadOrder, and may manage the profile download order by identifying whether it is intended for IFPP. The identification of whether the order is for IFPP may be based on the above-described IFPP order identifier or profile order ID. On the other hand, when the EID is not received together in operation 235, the profile server/server vendor 210 may change the profile state to "allocated" and process the same. When the EID is received together in operation 235, the profile server/server vendor 210 may link the EID with the ICCID and change the profile state to "linked", thereby preparing the profile.

The profile server/server vendor 210 may later receive a profile provision request (operation 245). According to an embodiment of the disclosure, the SP/SP server 205 or the profile server/server vendor 210 may share information for specifying a profile download order with the factory IT/OEM 215 (operation 240).

When the profile server/server vendor 210 receives a profile provision request for the IFPP from the factory IT/OEM 215, the profile server/server vendor 210 may identify which order among the previously profile generation orders requested from the SP corresponds thereto. The information that can identify which order it corresponds to may include at least one of a profile order ID, an address of a server in which the profile is stored, service provider identification information having requested the profile generation, information such as a start and end number of an ordered profile list or EID list, the ordered profile list, the EID list, and a factory IT identification number.

Thereafter, when the profile server/server vendor 210 receives the profile request information, it may identify the optionally included order identification information. When there are pre-prepared profiles for the optional order, the profile server/server vendor 210 may prepare BPPs by encrypting the pre-prepared profiles with the otPK.EUICC.KA corresponding to the eUICC, as described in the following procedure.

In operation 245, the factory IT/OEM 215 may provision a profile to a UE prior to shipping the UE from the factory. To this end, the factory IT/OEM 215 may request a BPP prepared for IFPP from the profile server/server vendor 210.

The method of indicating, from the factory IT 215 to the profile server/server vendor 210, that a request is an IFPP request may include at least one of a method in which a message is transmitted with a new function indicating that the message is for BPPs for IFPP, a method in which an IFPP identification indication is transmitted using an existing ES9+ function, or a method in which parameters required only for IFPP (e.g., at least one of information among otPK.EUICC.KA, a profile order ID, or an SP ID) are included in the transmission. The profile server/server vendor (210) may determine a method of indicating that a request is an IFPP request. As an example of utilizing the existing ES9+ function defined in SGP.22, a message such as ES9+.GetBoundProfilePackage may be transmitted with the IFPP identification indication included therein. Meanwhile, in the data of one of a series of subsequent messages accompanying a request for BPPs for IFPP or a BPP generation request, the factory IT/OEM 215 may transmit, to the profile server/server vendor 210, key information including otPK.EUICC.KAs corresponding to the eUICCs of the target UEs, in a number corresponding to the number of UEs on which the service provider 205 is to mount profiles, among the eUICC key information obtained in operation 630. In addition, the factory IT/OEM 215 may optionally include and transmit eUICC information as additional information, such as device capability information or eUICC capability information provided for BPP generation in the data of one of a series of subsequent messages accompanying a BPP generation request.

When the profile server/server vendor 210 receives, from the factory IT 215, a message by which it may determine that the request is for BPPs for IFPP and also receives key information for otPK.eUICC.KA, the profile server/server vendor 210 may determine that the request is for preparing a BPP for IFPP. In this case, the profile server/server vendor 210 may next determine the number of profiles currently available for preparation, and if it is difficult to process the requested number in real time, may transmit a comeback time (operation 250). In this operation, the profile server/server vendor 210 may also reply with the number of profiles that have been processed immediately upon the request (operation 250).

Although not shown in the drawing, the profile server may reply with, as addition to or alternative information to the comeback time, the interval time and/or the number of profiles available per interval time. If the interval time and the number of profiles available per interval time are returned, the factory IT/OEM may retain the relevant information and may then transmit a profile request message once per interval time, thereby possibly acquiring profiles until the comeback time is reached or until the desired number of profiles is obtained.

Upon receiving this, the factory IT/OEM 215 may recognize that the orders corresponding to the profile order ID have not been completely processed. Thereafter, after the comeback time, the factory IT/OEM 215 may access the profile server/server vendor 210 with the ID of the corresponding order (operation 275), and may obtain, from the profile server/server vendor 210, all remaining BPPs that have been generated (operation 270) in relation to the previous order (operation 280).

The factory IT/OEM 215 may access (operation 260) by including the ID of the corresponding order before the received comeback time. In this case, the profile server/server vendor 210 may identify the profile order ID, then identify whether a profile request deadline for the corresponding profile order ID has previously been provided, and, when it is determined that the access was made before the request deadline, may reply with an error message indicating that the profile generation is still in progress. This may be a message such as stillInProgress 121 indicated in <Table 1> above. Depending on the configuration of the profile server/server vendor 210, it may reply (operation 245) with an error message regarding the profile generation, by optionally adding the additional profiles generated up to the corresponding time point and/or by optionally adding the time required for generating the profiles.

When the profile server/server vendor 210 requests BPPs including a profile order ID without otPK.EUICC.KA, the profile server may return an error (operation 285). This may occur either when all otPK.EUICC.Kas, which are as the key materials required for generating profiles for the corresponding order, have been exhausted, or when the profile server has not previously received the otPK.EUICC.KA for the corresponding order.

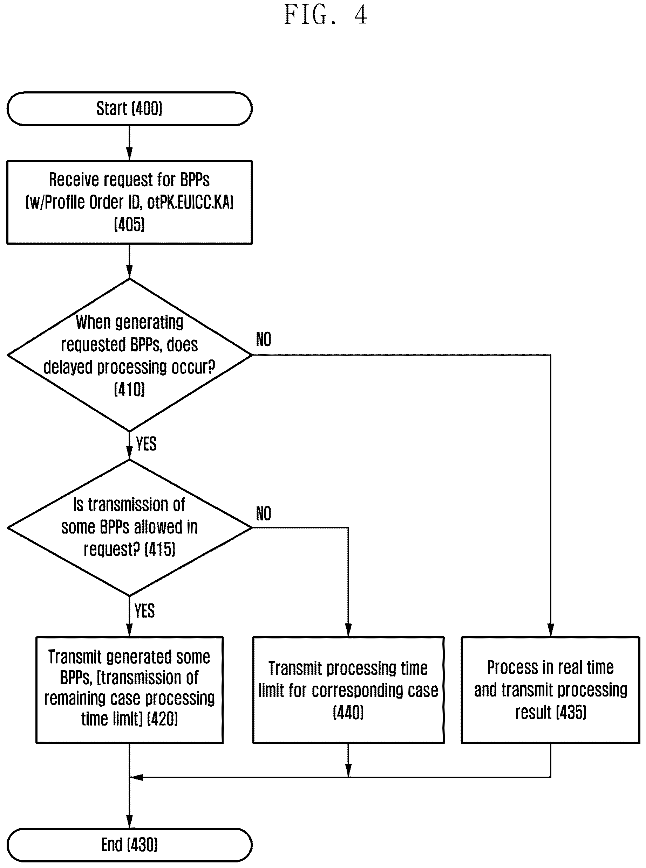

Operations of the profile server/server vendor 210 and the Factory IT/OEM 215 regarding processing of requests of transmission of a large number of profiles through ESbpp in FIGS. 2A and 2B will be described in detail below with reference to FIGS. 4 to 7.

The profile server/server vendor 210 may perform the operation of generating a BPP for the IFPP (operation 250 or 270). The profile server/server vendor 210 may enter a procedure for generating a BPP, which is an encrypted profile package, in the IFPP mode. The determination by the profile server/server vendor 210 to generate a BPP for the IFPP may be made when information is received from the factory IT 215 that enables such identification (e.g., information including at least one of a new function defined for the IFPP, a new IFPP indication in the existing ES9+ message that enables recognition of a profile download request in a factory, or new parameter (encryption key information, etc.)). When the profile server/server vendor 210 determines that a BPP should be generated for the IFPP, the profile server/server vendor 210 may generate a BPP for the IFPP by performing one or more of the following procedures. These examples are not intended to be limiting.

### - Profile Eligibility Check

This procedure may be selectively performed by the profile server/server vendor 210 to determine, before performing profile downloading, whether a profile type received from the SP through the ES2+ order interface is suitable for installation in a target UE/EID. When at least one of the EID, eUICC information, or device information is received through operations 235 to 245, a confirmation procedure may optionally be performed in operation 250 to verify whether the received profile order, particularly the profile type specified in the order, can be installed. Accordingly, the profile server/server vendor 210 may or may not perform eligibility check, including whether the EID/UE is capable of installing a profile for the IFPP.

### - Verification of eUICC Certificate (CERT.EUICC.SIG)

When the profile server/server vendor 210 receives CERT.EUICC.SIG in operation 245, it may perform verification. The profile server/server vendor 210 may verify the CERT.EUICC.SIG received in operation 245 by using a certificate of the EUM. The CERT.EUICC.SIG may include an EID, which may be configured by a series of numbers including one of the EINs in the EUM certificate. The profile server/server vendor 210 may authenticate whether the CERT.EUICC.SIG is a valid eUICC by identifying that the EID included in the CERT.EUICC.SIG matches one of the values of the allowed EINs (EUM identification IDs) included in the EUM certificate CERT.EUM.SIG.

### - Verification of eUICC signature

The profile server/server vendor 210 may verify the signature by decrypting, with the public key of the eUICC included in the CERT.EUICC.SIG, the signature generated with the secret key of the eUICC for data including the otPK.EUICC.KA.
- otSK/PK.DP.KA: generate a one-time secret/public key pair of the profile server.

Generate a session key using the otSK.DP.KA and the otPK.EUICC.KA received in operation 245.

The profile server/server vendor 210 may generate a shared secret value to be used for a specific profile transmission session by using the otSK.DP.KA and the otPK.EUICC.KA.

### - ServerChallenge

In operation 245 or operation before the operation 245, in case that the factory IT/OEM 215 requests the profile server/server vendor 210 to include ServerChallenge information for transmission, the profile server/server vendor 210 may generate the ServerChallenge information. The profile server/server vendor 210 may provide the ServerChallenge information in case that the eUICC 225 is designed to directly forward the ServerChallenge value that the profile server/server vendor 210 sends to the eUICC 225 in a mutual authentication procedure between them.

### - Generation of bound profile package (BPP)

The profile server/server vendor 210 may generate a profile package that is bound to an EID including a session key, a key replacement package, and ISD-P generation and configuration information.

When the profile server/server vendor 210 successfully generates a BPP for the IFPP in operation 250 or 270, the profile server/server vendor 210 may transmit the BPP and a series of information necessary for BPP installation to the factory IT/OEM 215 through one or more messages (operation 265 or operation 280).

The profile server/server vendor 210 may transmit, to the factory IT/OEM 215, the generated BPP and a list of encryption key information required for verifying the BPP in the mapped eUICC through one or more messages. The encryption key information, for example public keys, may be transmitted either included in a certificate or without being included in a certificate. In addition, the information transmitted by the profile server/server vendor 210 may include order identification information, for example, information such as a service provider ID, a profile order ID, or an order ID. According to an embodiment of the disclosure, the information transmitted by the profile server/server vendor 210 may include a message such as ESbpp.GetBoundProfilePackage Response ([SP ID], ([Profile order ID], (BPP including otPK.DP.KA, CERT.EUICC.SIG, [CERT.DPauth.SIG], CERT.DPpb.SIG, [ServerChallenge]) × N)). The information transmitted in operation 355 may be configured as a single message or as two or more messages, and may be transmitted to the factory IT/OEM 215 and stored in the factory IT 215.

The factory IT 215 may store the received BPP together with the EIDs mapped to each BPP and the encryption key information for downloading and installing the BPPs for the corresponding EIDs, and then perform profile provisioning (operation 290). The provisioning procedure may include a procedure in which the factory IT 215 transmits, to the UE 220, the BPPs and the encryption key information for downloading and installing the BPPs, the UE 220 transmits the BPPs and the encryption key information for downloading and installing the BPPs to the eUICC 225, and the eUICC 225 verifies the transmitted BPPs and the encryption keys for installing the same, and performing profile installation.

The procedure in which the UE 220 installs a BPP in the eUICC 225 may include transmitting a message to the eUICC 225 via an LPAf (not illustrated), or transmitting the message directly to the eUICC 225 without going through the LPAf. As an example of a message transmitted to the eUICC via the LPAf, the message may be transmitted as being included in one or more messages defined in the ES10x. In addition, a method by which the UE transmits the message may be one of the following methods. However, the transmission is not limited to the methods given below.
- A method of processing by reusing three procedures defined in SGP.22, namely, a mutual authentication procedure between the server and the eUICC, a pre-information sharing procedure for profile installation, and a BPP installation procedure.
- A method of processing in two procedures by reusing, among the above three procedures of SGP.22, the mutual authentication procedure between the server and the eUICC and the BPP installation procedure.
- A method of processing by defining a new function consisting of a single procedure, in which the UE 220 collectively transmits the BPP and key information related to the BPP to the eUICC 225.

When the profile is installed in the eUICC 225, the profile installation result may be returned to the UE 220 as a value signed by the eUICC, transmitted to the factory IT/OEM 215 via the UE 220, and then, at a specific timepoint, collected by the factory IT/OEM 215 and forwarded in a batch to the profile server/server vendor 210. Alternatively, the eUICC-signed installation result may be transmitted to the profile server/server vendor 210 after factory shipment as a notification defined in SGP.22 through the ES9+ interface.

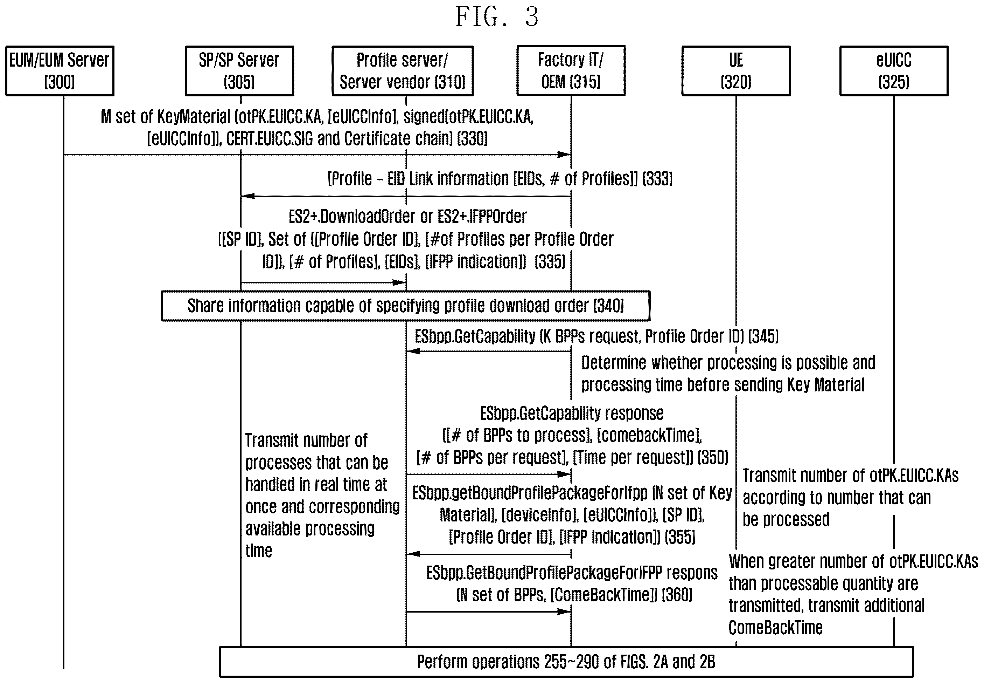

FIG. 3 is an exemplary diagram illustrating a procedure in which a factory IT/OEM 315 requests a large number of profiles from a profile server/server vendor 310 according to an embodiment of the disclosure. In FIG. 3, operations 330 to 340 are the same as operations 230 to 240 of FIG. 2A, and thus reference is made thereto.

In FIG. 3, before transmitting key materials including otPK.EUICC.KA upon requesting profiles, the factory IT/OEM 315 may first identify the capabilities of the profile server/server vendor 310 with respect to real-time profile generation, and may then transmit only a necessary number of key materials according to the capabilities. For example, the factory IT/OEM 315 may transmit a message such as ESbpp.GetCapability, along with a profile order ID and additionally a number of BPPs corresponding thereto (operation 345). The profile server/server vendor 310 that has received the message may transmit the message including at least one of a number of profiles that can be processed (in real time) at once, the corresponding processing time, and whether real-time processing is possible (operation 350).

When requesting a large number of profiles (in operation 355), the factory IT/OEM 315 that has received the message may, based on the information replied in operation 350, transmit key materials including otPK.EUICC.KA (operation 355). For example, when the factory IT/OEM 315 desires to request one million profiles, and if the value replied in operation 350 is five hundred thousand, the factory IT/OEM 315 may transmit only key materials including otPK.EUICC.KA corresponding to five hundred thousand profiles, instead of transmitting key materials corresponding to one million profiles.

In operation 355, the factory IT/OEM 315 may also transmit key materials including otPK.EUICC.KA in a number greater than the number of profiles available for processing as replied in operation 350. In this case, the profile server/server vendor 310 may generate and reply with BPPs in a number corresponding to the number of profiles that can be processed in real time, or may generate and reply with the BPPs together with a comeback time, so that, as in operations 255 to 290 of FIGS. 2A and 2B, the factory IT/OEM 315 may request BPPs with a profile order ID from the profile server/server vendor 310 at a specific timepoint and obtain the profiles generated during the meantime.

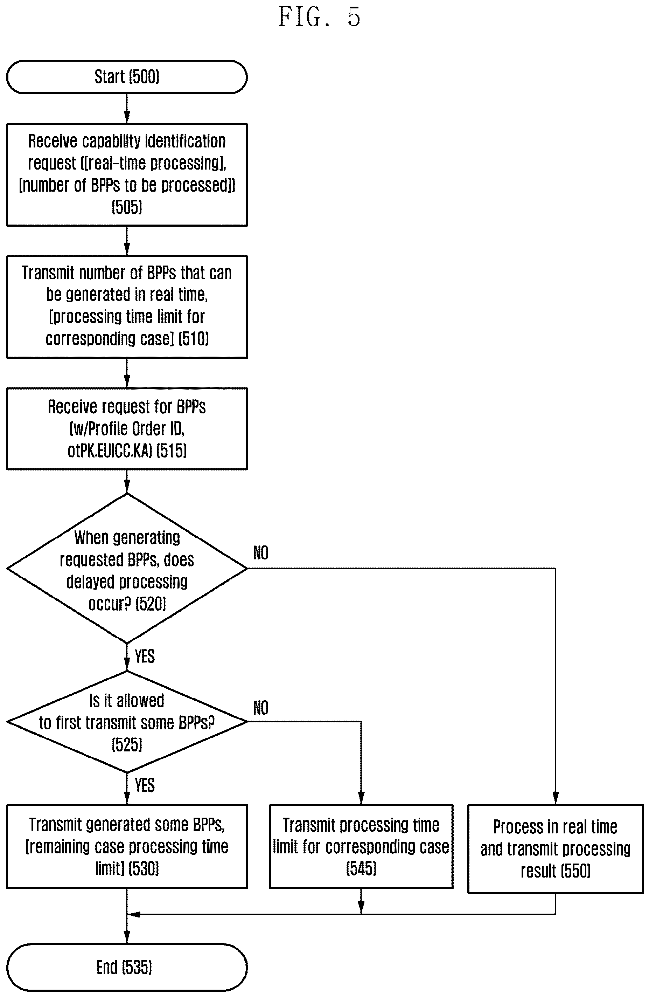

Details of the operations between the profile server/server vendor 310 and the factory IT/OEM 315 for handling a request for transmitting a large number of profiles through ESbpp in FIG. 3 will be described later with reference to FIGS. 5 to 8.

FIG. 4 is an exemplary diagram illustrating a determination of a profile server according to an embodiment of the disclosure.

FIG. 4 illustrates an operation of the profile server when receiving a request for BPPs including otPK.EUICC.KA as described in FIGS. 2A and 2B and FIG. 3. The profile server, as a server supporting IFPP, may be in a state in which it has received an order for profiles for IFPP and has profile order information, such as a profile order ID (operation 400). Thereafter, the profile server/server vendor may receive, at a specific timepoint, a message for a request for BPPs from the factory IT/OEM (operation 405). Upon receiving the message, the profile server/server vendor may determine whether a delay processing occurs in generating the requested BPPs (operation 410). When no delay processing occurs, the profile server/server vendor may process the request in real time and transmit the requested BPPs as the result of the processing (operation 435).

When it is determined in operation 410 that not all of the requested BPPs can be generated, the profile server may additionally determine whether to allow transmission of some BPPs in the request (operation 415). When transmission of some of the generated BPPs is allowed, the profile server/server vendor may transmit the generated BPPs, and may also transmit, as additional information, a processing time limit (comeback time). When transmission of the BPPs in a batch is allowed only after all of the requested BPPs have been generated, the profile server/server vendor may transmit a processing time limit for the request (operation 440), and may complete the procedure (operation 430).

FIG. 5 is an exemplary diagram illustrating a determination of a profile server according to an embodiment of the disclosure. FIG. 5 is a diagram for describing in detail the operation of the profile server with respect to FIG. 3. The operation differs from the operation of the profile server described in FIG. 4 in that operations 500, 505, and 510 are additionally performed before operation 410, while the subsequent operations may be processed in the same manner. Accordingly, in FIG. 5, operations 515 to 550 may be interpreted with reference to operations 405 to 440 of FIG. 4.

FIG. 5 illustrates an operation of the profile server when receiving a request for BPPs including otPK.EUICC.KA as described in FIGS. 2A and 2B and FIG. 3. The profile server, as a server supporting IFPP, may be in a state in which it has received an order for profiles for IFPP and has profile order information, such as a profile order ID (operation 500).

The profile server may receive, from the factory IT/OEM, a request message for identifying the capability of the profile server to perform real-time generation processing of BPPs. The message may include at least one of information on whether real-time processing is possible, the number of BPPs to be processed, and a profile order ID, and in case that an ESbpp. function explicitly indicates real-time processing capability, the message may be received without a parameter (operation 505). Upon receiving the message, the profile server may determine the number of BPPs that can be generated in real time, and may reply with the determined number of BPPs that can be generated and when the number of requested BPPs greater than the number that can be generated in real time is received, the profile server may further include, in the reply, a processing time limit for the remaining BPPs (operation 510).

Thereafter, at a specific timepoint, a message for a request for BPPs may be received from the factory IT/OEM (operation 515). Upon receiving the message, the profile server/server vendor may determine whether a delay occurs in generating the requested BPPs (operation 520). When no delay occurs, the profile server/server vendor may process the request in real time and transmit the requested BPPs as a processing result (operation 550).

The profile server may determine that no delay processing occurs when the number of received otPK.EUICC.KAs is equal to or less than the number of profiles capable of being generated in real time that has been previously transmitted, or when the number of received profile requests is equal to or less than the number of profiles capable of being generated in real time.

When it is determined in operation 520 that not all of the requested BPPs can be generated, the profile server may further determine whether to allow transmission of some BPPs in the request (operation 525). When transmission of some of the generated BPPs is allowed, the profile server/server vendor may transmit the generated BPPs and may also transmit, as additional information, a processing time limit as a comeback time. When transmission of the BPPs in a batch is allowed only after all of the requested BPPs have been generated, the profile server/server vendor may transmit a processing time limit for the request (operation 545), and may complete the procedure (operation 535).

FIG. 6 is an exemplary diagram illustrating a determination of a profile server according to an embodiment of the disclosure. FIG. 6 illustrates an operation of the profile server when receiving a request for BPPs that does not include otPK.EUICC.KA as described in FIGS. 2A and 2B and FIG. 3.

The profile server may receive a request for BPPs without otPK.EUICC.KAs (operation 605), and may determine whether to return an error or to transmit the BPPs. The profile server may identify the corresponding profile order ID and determine whether there are unused otPK.EUICC.KAs that have been received for the order (operation 610). When there are no unused otPK.EUICC.KAs, the profile server/server vendor may determine whether BPPs corresponding to the order have already been generated using the otPK.EUICC.KAs and transmitted to the factory IT/OEM (operation 655). For example, the profile server may distinguish whether a received profile request relates to an order for which all BPPs have already been generated based on previously received otPK.EUICC.KAs, or whether it is a new profile generation request that has been transmitted without including an otPK.EUICC.KA.

When all otPK.EUICC.KAs have been used to generate and reply with BPPs, such that the order has been fully processed, the profile server may return an error indicating completion of processing (operation 640). When there are no unused otPK.EUICC.KAs and it is not the case that all of the BPPs corresponding to the order have been transmitted, the profile server/server vendor may determine that an otPK.EUICC.KA has been omitted and may return an error regarding missing data (operation 645).

Meanwhile, when there are unused otPK.EUICC.KAs for the order (operation 610), the profile server may determine whether a processing time limit (comeback time) has been previously provided (operation 615), and may perform one of the subsequent operations and complete the operation by transmitting a reply message (operation 630).
- When no processing time limit has been provided, the profile server may generate and reply with BPPs up to the maximum number of unused otPK.EUICC.KAs (operation 655).
- When a processing time limit has been provided and the request is received after the deadline, the profile server may transmit all remaining BPPs (operation 625). When the request is received after the deadline and an additional processing time limit is required, the profile server may regenerate a comeback time and return the comeback time in a reply (operation 625).
- When a processing time limit has been provided and the request is received within the deadline, the profile server may return an error indicating that processing is in progress, and may reply with or without including the profiles that have been generated up to the corresponding timepoint, and may reply with the remaining time.

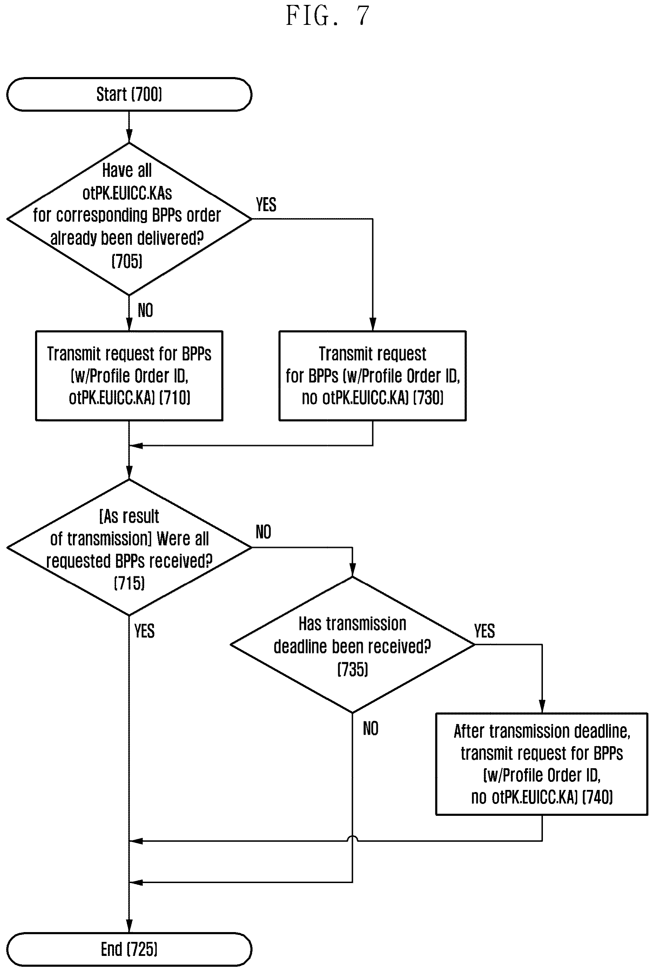

FIG. 7 is an exemplary diagram illustrating a determination of a factory IT/OEM according to an embodiment of the disclosure.

FIG. 7 illustrates an operation and determination of a terminal manufacturer server that transmits a request for a large number of BPPs for an IFPP as described in FIGS. 2A and 2B. Prior to performing this procedure, the factory IT/OEM may have received and stored key materials including otPK.EUICC.KA, and may request profiles from an SP/SP server so that the SP/SP server requests an order for profiles from the profile server. In addition, the factory IT/OEM may acquire and hold a profile order ID as information regarding the order from the SP/SP server or the profile server (operation 400). Thereafter, at a specific timepoint, the factory IT/OEM may request profiles from the profile server/server vendor. During the process of generating a message regarding the order, the factory IT/OEM may determine whether otPK.EUICC.KAs for the BPP order have already been transmitted to the profile server/server vendor (operation 705). When it is determined that the otPK.EUICC.KAs have already been transmitted, the factory IT/OEM may, when a BPP transfer request is made, transmit the request by including the profile order ID but without including the otPK.EUICC.KAs that were already transmitted (operation 730). On the other hand, if the otPK.EUICC.KAs have not yet been transmitted, the factory IT/OEM may, when transmitting the BPP request message, transmit the request by including the profile order ID together with the otPK.EUICC.KAs (operation 710).

The factory IT/OEM may determine, from the reply message received as a result of the transmission, whether all the requested BPPs are included (operation 715). This determination may be made, for example, based on a value such as the number of otPK.EUICC.KAs or an explicitly requested number of BPPs.

When all the requested BPPs have been received, the factory IT/OEM may store the received BPPs and complete the procedure (operation 735)
When all the requested BPPs have not been received in the reply message, the factory IT/OEM may further determine whether a parameter for a transmission deadline is included in the reply (operation 735). When the transmission deadline is received, the factory IT/OEM may store the transmission deadline and may request transmission of the BPPs after the deadline (operation 740). When the factory IT/OEM requests the transmission of BPPs after the transmission deadline, it may generate a message including the profile order ID but excluding the otPK.EUICC.KAs and transmit the request (operation 740). As a result of this request, the factory IT/OEM may receive the remaining BPPs, store the received BPPs, and complete the procedure (operation 725). If the transmission deadline has not yet been reached (operation 735), the factory IT/OEM may repeatedly re-request the BPPs from the profile server/server vendor so as to obtain the remaining BPPs. In this case, since the otPK.EUICC.KAs have already been transmitted, the factory IT/OEM may proceed to operation 730 and thereafter perform the subsequent procedures to complete the process (operation 725).

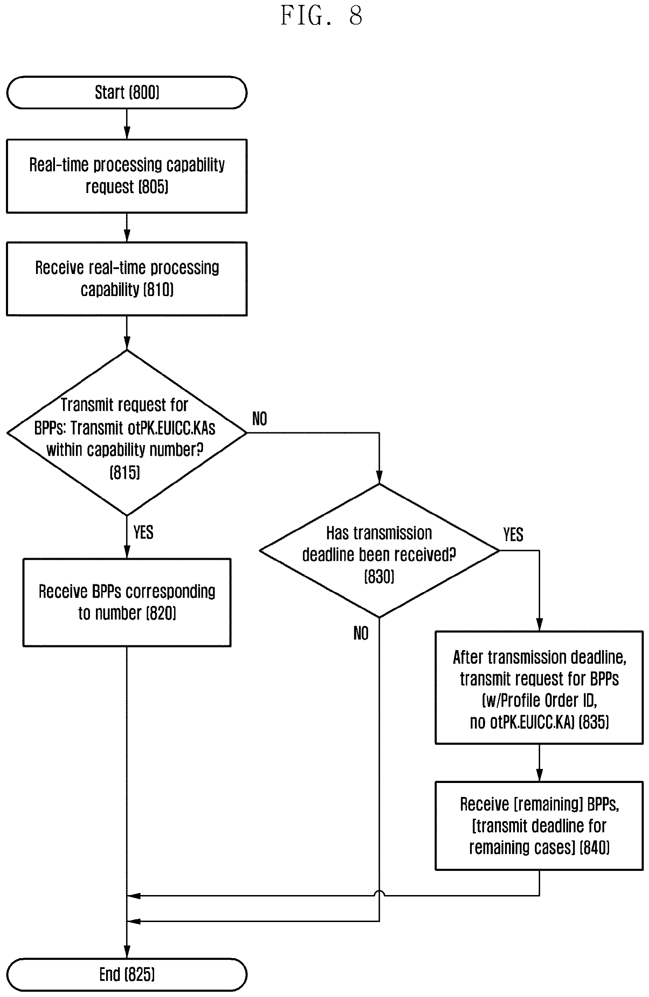

FIG. 8 is an exemplary diagram illustrating a determination of a factory IT/OEM according to an embodiment of the disclosure.

FIG. 8 illustrates an operation and determination of a terminal manufacturer server that transmits a request for a large number of BPPs for IFPP as described in FIG. 3. Portions not described in this figure may be understood with reference to FIGS. 3 to 5.

The factory IT/OEM may be configured to transmit a message for identifying the real-time processing capability of the profile server before transmitting key information including otPK.EUICC.KAs while requesting generation of BPPs (operation 800). The term "real-time processing" may mean that processing is performed while a session between the terminal manufacturer server and the factory IT/OEM is maintained.

In this case, the factory IT/OEM may configure and transmit a message requesting the real-time processing capability by including predetermined information (operation 805). The predetermined information may include the number of profiles to be requested and may be transmitted, and a profile order ID may be included as profile order information and transmitted. Alternatively, the message may be configured and transmitted without the predetermined information, using the ESbpp function to determine whether the message is a request for real-time processing capability. After transmitting the message, the factory IT/OEM may receive, from the profile server, a message regarding the real-time processing capability in response thereto (operation 810). The message may be returned including at least one piece of information among whether real-time processing is possible, BPPs that have been processed in real time, a comeback time for processing of (remaining) BPPs, the number of BPPs that can be processed in one request, and the processing time in one request. The factory IT/OEM that has received the message may determine the number of profiles within the real-time processable quantity, and may determine, according to the factory IT/OEM configuration, whether to configure and transmit a message including a number of otPK.EUICC.KAs within the corresponding quantity (operation 815). If the factory IT/OEM transmits a message including only the number of otPK.EUICC.KAs within the corresponding number, the factory IT/OEM may receive, in a message received from the profile server, the BPPs corresponding to the same number (operation 820). When, in operation 810, the processing time and the number of BPPs that can be processed in one request are received, the terminal manufacturer server may, with reference to the received processing time and processable number, periodically request BPPs from the profile server and receive the same. For example, the terminal manufacturer server may repeatedly transmit the request message of the BPPs corresponding to the number of BPPs that can be processed by the profile server in one request, in accordance with the processing time cycle. In this case, the request message of profile BPPs transmitted by the terminal manufacturer server may further include predetermined information indicating which number the current message is among a plurality of request messages of the BPPs transmitted to receive the total BPPs. When the profile server receives the request message of the BPPs further including predetermined information indicating which number the current message is among the total request messages of the BPPs, the profile server may predict how many additional identical request messages of the BPPs will be received within the processing time cycle previously replied, and may accordingly determine the total number of profiles to be prepared.

When the factory IT/OEM transmits a number of otPK.EUICC.KAs greater than the specified number, the factory IT/OEM may receive, in a message in response thereto, a transmission deadline (operation 830). When the transmission deadline is received, the factory IT/OEM may re-transmit the request for BPPs after the transmission deadline. In this case, since a greater number of otPK.EUICC.KAs has already been transmitted, the request for BPPs may be transmitted including the profile Order ID without additionally transmitting the otPK.EUICC.KAs (operation 835). Accordingly, the factory IT/OEM may receive, from the profile server, a message including the profiles corresponding to the number of the previously transmitted remaining otPK.EUICC.KAs. If the factory IT/OEM does not receive all of the profiles corresponding to the remaining otPK.EUICC.KAs and a processing time limit is also received, the factory IT/OEM may determine that the profile server has failed to generate all of the BPPs. In this case, the factory IT/OEM may additionally re-connect after the processing time limit, as illustrated in FIG. 7, to receive the remaining BPPs.

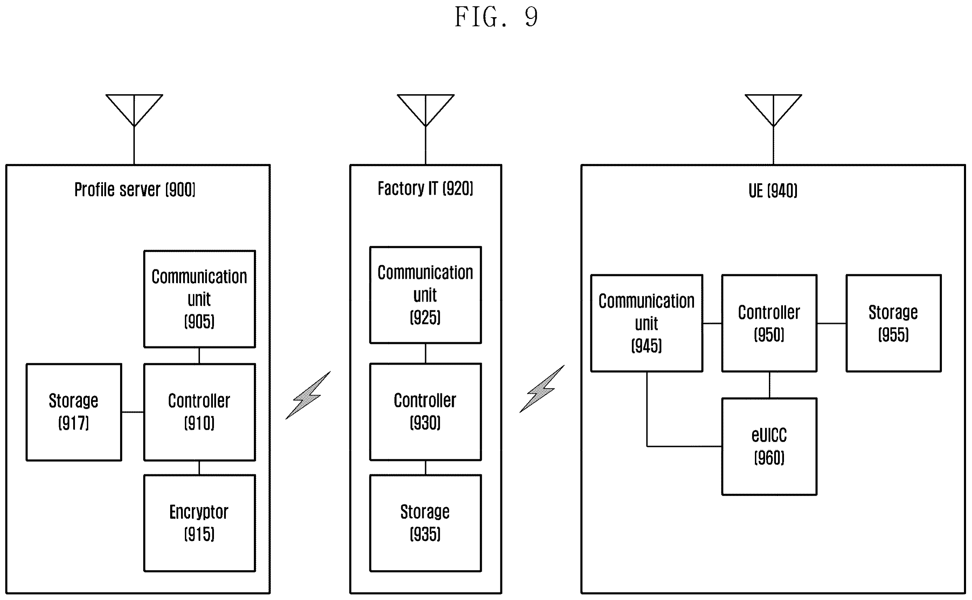

FIG. 9 is a block diagram illustrating structures of a profile server 900, a factory IT 920, and a UE 940 in a wireless communication system according to an embodiment of the disclosure.

Referring to FIG. 9, the profile server 900 according to an embodiment of the disclosure may include a communication unit 905, a controller 910, and an encryptor 915. The controller 910 may be implemented by at least one processor.

The communication unit 905 may transmit data to or receive data from other devices. The communication unit 905 may transmit or receive encrypted keys, encrypted profiles, and the like. To this end, the communication unit 905 may include at least one communication module and an antenna.

The controller 910 may control each component of the profile server 900 for profile installation according to the disclosure. Specific operations of the controller 910 are as described above or will be described later. According to an embodiment, the profile server 900 may determine, by referring to information received from a service provider server, a manufacturer server, or from both the service provider and the manufacturer, whether the information relates to the same order, and may map the profile and the eUICC provisioning information for the same order and store them in a storage 917. In addition, the profile server may control its operation to refer to EID information received from the service provider and prepare the profile in advance by mapping the profile to a specific EID. According to another embodiment, the controller 910 may determine, based on information received from a message received through the communication unit 905, whether a profile needs to be prepared for IFPP, and may process entry into an operation of preparing the profile and perform the corresponding operation.

According to still another embodiment, the controller 910 may determine, based on information received from a message through the communication unit 905, whether eUICC provision information, such as otPK.EUICC.KAs, is stored in the storage 917, and may configure a reply message according to whether the information is included, and transmit the reply through the communication unit 905. The controller 910 may also determine whether profiles can be processed and replied in real time, and when real-time processing is not possible, may generate a processing time limit and/or a remaining deadline and transmit the same through the communication unit 905. When generating a processing time limit and/or a remaining deadline, the controller 910 may manage the deadline by using a clock.

According to still further embodiment, the controller 910 may determine, based on a message received through the communication unit 905, whether the message is received within or after the processing time limit, and may configure and transmit a reply message accordingly through the communication unit 905.

According to yet another embodiment, the controller 910 may control the operations of the profile server 900 as described in various embodiments of the disclosure.

According to yet further another embodiment, in a preparatory process for preparing and providing BPPs, the profile server 900 may receive a message that has been received from the factory IT through the communication unit 905, determine from the received message that it is a request for downloading profiles for IFPP, and operate to prepare profiles for factory use, and may transmit a processing result to the factory IT through the communication unit 905. The encryptor 915 may perform encryption of the profiles under the control of the controller 910, generate a bound profile package, and provide the same to the controller 910. Some or all of the information received through the communication unit 905, for example, a profile order ID received from an SP/SP server (not shown), or eUICC certificate chain information or otPK.EUICC.KAs received from the factory IT 920, may be stored in the storage 917.

The encryptor 915 may include a hardware security module (HSM) or may itself be referred to as an HSM, and may perform encryption and decryption of profiles without exposing cryptographic keys. Depending on implementation, the encryptor 915 may be embedded in the controller 910, or may be implemented in the form of software code driven by the controller 910.

Referring to FIG. 9, the factory IT 920 according to an embodiment of the disclosure may include a communication unit 925, a controller 930, and a storage 935. The factory IT 920 may also be implemented as a combination of multiple devices including one or more of the communication unit, the controller, and the storage. When multiple devices are connected to each other, each device for connection may include a communication unit, and a device for centrally controlling the devices may be included in the configuration. As described above, the factory IT 920 may also be configured with one or more devices. Reference is additionally made to the description of FIG. 1 in this regard.

In addition, according to an embodiment of the disclosure, the communication unit 925 may transmit or receive encrypted keys, encrypted profiles, and the like. To this end, the communication unit 925 may include at least one communication module and an antenna. According to an embodiment of the disclosure, the storage 935 and the communication unit 925 may be provided as a single device for the factory IT 920. The factory IT 920 may transmit profile order information and/or encrypted key information to the profile server 900 through the communication unit 925 that provides a wireless communication connection, or may receive at least one of encrypted profiles and/or processing time limits from the profile server 900. In addition, according to an embodiment of the disclosure, the factory IT 920 may transmit a stored encrypted profile to the UE 940 through the communication unit 925, or may receive a response message regarding a processing result from the UE.

In addition, according to an embodiment of the disclosure, a profile received by the factory IT 920 from the profile server 900 through the communication unit 925, or an encrypted key obtained in advance from an EUM (not shown), may be stored in the storage 935 by the controller 930, or may be transmitted through the communication unit 925 to a device within the factory IT 920 responsible for profile provisioning. The communication unit 925 of the device responsible for profile provisioning may then transmit the profile or key information to the UE 940 via a wired or wireless connection.

In addition, according to an embodiment of the disclosure, the storage 935 of the factory IT 920 may store at least one encrypted profile, store encrypted key information for one encrypted profile, or receive and store a loading result received from the UE 940.

According to an embodiment of the disclosure, the controller 930 may obtain at least one of a processing time limit, a remaining deadline, encrypted key information, and profile order information from the storage 935 to configure a request message of BPPs to be transmitted to the profile server 900, and may transmit the configured message to the communication unit 905 of the profile server through the communication unit 925.

In addition, according to an embodiment of the disclosure, the factory IT 920 may process so that a processing time limit or a remaining time received from the profile server 900 through the communication unit 925 is stored in the storage 935 by the controller 930. In addition, the controller 930 may process to schedule generation of the request message of generation of the BPPs at a specific timepoint after the processing time limit or the remaining time, based on the processing time limit or the remaining time, and may perform transmission of the corresponding message through the communication unit 925.

The storage 935 may include at least one type of storage medium such as a hard disk, random access memory (RAM), static random access memory (SRAM), read-only memory (ROM), electrically erasable programmable ROM (EEPROM), programmable ROM (PROM), magnetic memory, magnetic disk, and optical disk. In addition, according to an embodiment of the disclosure, the factory IT 920 may be configured with multiple devices as described above, and in this case, the communication unit may provide communication services limited to external network access of the terminal manufacturer or to internal network access of the terminal manufacturer.

In addition, according to an embodiment of the disclosure, the controller 930 may include at least one processor. The controller 930 may control operations of the factory IT 920 according to various embodiments of the disclosure.

Referring to FIG. 9, the UE 940 may include a communication unit 945, a controller 950, a storage 955, and an eUICC 960. Although the eUICC 960 is detachable as described above, it is usually fixed in the UE in a non-detachable manner when shipped, and thus is indicated as a part of the UE 940. The communication unit 945 may transmit or receive data to and from other devices. For example, the data received may include one of an encryption key, an encrypted profile, and certificate information. The data transmitted may include a response message according to the result of profile loading. To this end, the communication unit 945 may include at least one communication module and an antenna.

In addition, according to an embodiment of the disclosure, the controller 950 may control respective components of the UE 940 for profile installation according to the disclosure. The controller 950 may control overall operations of the UE 940. For example, the controller 950 may transmit and receive signals through the communication unit 945. In addition, the controller 950 may write data to and read data from the storage 955. The controller 950 may include at least one processor. For example, the controller 950 may include a communication processor (CP) that performs control for communication, and an application processor (AP) that controls higher layers such as applications. According to an embodiment, when configuration information is stored in the storage 955, the controller 950 may request the configuration information from the storage 955 so that a display (not shown) displays the configuration information, or may receive the configuration information and perform additional operations.

According to another embodiment, the controller 950 may perform a process of matching data records read from the storage 955 with information collected through the controller 950 and the communication unit 945, and of deriving, by the UE, information that can be referenced for profile installation selection in the factory. The controller 950 may control the UE 940 to perform an operation corresponding to the process. According to an embodiment, the controller 950 may include an FPA responsible for driving and controlling the eUICC 960, an application in which the FPA is integrated, or an application that manages factory installation. In addition, the controller 950 may include a UE framework that interprets information received by the FPA or the application, processes a specific command APDU request in the communication processor (CP), or collects part or all of the requested information from the storage 955 and replies the same to the FPA or the application.

In addition, according to an embodiment of the disclosure, the controller 950 may determine whether to enter an IFPP mode by synthesizing predetermined information acquired from the eUICC 960 through the UE 940 and the communication unit 945, and may control the eUICC 960 to enter the IFPP mode. The eUICC 960 may operate under the control of the controller 950. According to an embodiment, the eUICC 960 may process a request for profile installation received from the controller 950, and may return the processing result to the controller 950.

In addition, according to an embodiment of the disclosure, the controller 950 may receive profile information of a profile package or a response message from the factory IT 920, and may determine whether to perform profile installation in a factory mode by referring to a UE configuration at the time of reception or a user input, may determine whether to enter an IFPP mode, or may configure a message to be transmitted to the eUICC 960 for profile installation through the IFPP. In addition, the controller 950 may configure the profile information of the profile package into one or more messages, control transmission of a message including the profile information to the eUICC 960, or detect occurrence of an error in the profile installation process and transmit a request for cancel session to the eUICC 960. In addition, the controller 950 may receive a processing result received at the UE 940 from the eUICC 960, determine whether to terminate the procedure, and control to store the processing result in the storage 955, transmit the processing result to the communication unit 945, or control the UE 940 to cause the communication unit 945 to transmit the processing result to the factory IT 920.

The storage 955 may store data such as a basic program, an application program, and configuration information for operations of the UE 940. In an embodiment according to the disclosure, the storage 955 may include at least one storage medium among a flash memory type, a hard disk type, a multimedia card micro type, a card-type memory (e.g., SD or XD memory), a magnetic memory, a magnetic disk, an optical disk, a random access memory (RAM), a static random access memory (SRAM), a read-only memory (ROM), a programmable read-only memory (PROM), and an electrically erasable programmable read-only memory (EEPROM). The storage 955 may be integrally implemented with the controller 950 as a system on chip (SoC). The controller 950 may perform various operations using programs, content, and data stored in the storage.

In FIG. 9, the eUICC 960 is a UICC chip embedded in the UE 940, and may perform functions of storing, managing, and deleting at least one profile. The profile may collectively refer to one or more applications and data information such as subscriber authentication information and phone book information stored in a conventional UICC card. The eUICC 960 may be included as a part of the UE 940 as illustrated in FIG. 1, and in the preceding drawings, the UE 940 and the eUICC 960 were represented as separate modules in order to describe operations between the UE 940 and the eUICC 960. The eUICC 960 may include a controller, a storage, and a communication unit for profile installation. Some of the applications in the eUICC 960 may be installed in the controller 950, and the installed applications may include part of the function of the FPA.

According to an embodiment of the disclosure, the controller of the eUICC 960 may acquire profile installation request information or deletion request information through a message of the UE 920 received through the communication unit. The controller may then process installation or deletion of a profile, may return a loading result of the installation or deletion, may generate a pending notification after the installation or delete processing and store the pending notification in the storage, may determine whether to additionally delete the generated pending notification, and may accordingly perform deletion of the pending notification and transmit the result in a response message. In addition, the controller of the eUICC 960 may determine whether to enter the IFPP based on information in the received message or a new function defined for the IFPP, and may determine an operation accordingly. The controller may then perform a profile installation or deletion procedure for the IFPP, and may verify the received information by comparing it with information in the storage of the eUICC 960. For example, when a command for a profile installation request is received, the eUICC 960 may verify the received profile package, perform an installation operation, and transmit a signed processing result to the UE 940 through the communication unit. As described in embodiments of the disclosure, an example of information compared and verified with the information in the storage of the eUICC 960 and processed through the controller 950 may include the presence or absence of otPK.EUICC.KA used for profile installation or deletion, a transaction ID mapped to a session, and certificate information of the SM-DPf.

However, the components referred to in FIG. 9 are not limited to the foregoing examples. For example, the factory IT 920 may include more or fewer components than those described above. For example, the profile server 900 may include more or fewer components than those described above. For example, the UE 940 may also include more or fewer components than those described above. The UE 940 according to various embodiments disclosed herein may be an electronic device, and the electronic device may be a device of various types. The electronic device may include, for example, a portable communication device (e.g., a smartphone), a computer device, a portable multimedia device, a portable medical device, a camera, a wearable device, or a home appliance device. The electronic device according to an embodiment of this document is not limited to the above-described devices.

In various embodiments of the disclosure, the operations of the FPA, LPA, and the eUICC have been described separately for convenience of explanation. However, it should be noted that the operations of the FPA, LPA, and the eUICC may be described as operations of the UE. For example, transmission/reception operations of the FPA may be described as transmission/reception operations of the UE.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a profile server for providing a profile to be provisioned to an embedded universal integrated circuit card (eUICC), the method comprising:
receiving, from a terminal manufacturer server, a providing request for a plurality of bound profile packages (BPPs);
determining whether delayed processing occurs during BPP generation according to the providing request for the plurality of BPPs;
in case that delayed processing does not occur during BPP generation according to the providing request for the plurality of BPPs, generating the requested BPPs and transmitting the generated BPPs to the terminal manufacturer server; and
in case that it is determined that delayed processing occurs during BPP generation according to the providing request for the plurality of BPPs, transmitting, to the terminal manufacturer server, information on a processing time limit (comeback time) of processing of the providing request for the plurality of BPPs.

2. The method of claim 1, further comprising, in case that it is determined that delayed processing occurs during BPP generation according to the providing request for the plurality of BPPs, generating only some of BPPs corresponding to the providing request for the plurality of BPPs and transmitting the generated BPPs to the terminal manufacturer server.

3. The method of claim 2, wherein the providing request for the plurality of BPPs comprises information indicating that transmission of some BPPs among the requested BPPs is allowed.

4. The method of claim 1, further comprising, in case that an access request from the terminal manufacturer is received before expiration of the processing time limit, transmitting, to the terminal manufacturer, at least one of an error message, some BPPs having been generated among the requested BPPs to be generated, or a remaining time until completion of generation of all the requested BPPs to be generated.

5. The method of claim 1, further comprising, in case that an access request from the terminal manufacturer is received after expiration of the processing time limit, transmitting, to the terminal manufacturer, BPPs not previously transmitted to the terminal manufacturer among the BPPs having been generated.

6. The method of claim 1, wherein the providing request for the BPPs, received from the terminal manufacturer server, comprises information indicating that the providing request is a request for BPPs for in-factory profile provisioning (IFPP).

7. The method of claim 1, further comprising:
receiving, from the terminal manufacturer server, a request for information on BPP generation capability; and
transmitting, to the terminal manufacturer server, information on BPP generation capability of the profile server.

8. A method performed by a terminal manufacturer server for performing profile provisioning to an embedded universal integrated circuit card (eUICC), the method comprising:
transmitting, to a profile server, a providing request for a plurality of bound profile packages (BPPs);
receiving, from the profile server, information on a processing time limit (comeback time) of processing of the providing request for the plurality of BPPs; and
after expiration of the processing time limit, accessing the profile server to receive the requested BPPs.

9. The method of claim 8, further comprising:
transmitting, to the profile server, a request for information on BPP generation capability; and
receiving, from the profile server, information on BPP generation capability of the profile server,
wherein the providing request for the plurality of BPPs is determined based on the BPP generation capability of the profile server.

10. A profile server for providing a profile to be provisioned to an embedded universal integrated circuit card (eUICC), the profile server comprising:
a communication unit; and
a controller,
wherein the controller is configured to:
receive, from a terminal manufacturer server, a providing request for a plurality of bound profile packages (BPPs);
determine whether delayed processing occurs during BPP generation according to the providing request for the plurality of BPPs;
in case that delayed processing does not occur during BPP generation according to the providing request for the plurality of BPPs, generate the requested BPPs and transmit the generated BPPs to the terminal manufacturer server; and
in case that it is determined that delayed processing occurs during BPP generation according to the providing request for the plurality of BPPs, transmit, to the terminal manufacturer server, information on a processing time limit (comeback time) of processing of the providing request for the plurality of BPPs.

11. The profile server of claim 10, wherein the controller is further configured to, in case that it is determined that delayed processing occurs during BPP generation according to the providing request for the plurality of BPPs, generate only some of BPPs corresponding to the providing request for the plurality of BPPs and transmitting the generated BPPs to the terminal manufacturer server.

12. The profile server of claim 10, wherein the controller is further configured to, in case that an access request from the terminal manufacturer is received before expiration of the processing time limit, transmit, to the terminal manufacturer, at least one of an error message, some BPPs having been generated among the requested BPPs to be generated, or a remaining time until completion of generation of all the requested BPPs to be generated.

13. The profile server of claim 10, wherein the controller is further configured to, in case that an access request from the terminal manufacturer is received after expiration of the processing time limit, transmit, to the terminal manufacturer, BPPs not previously transmitted to the terminal manufacturer among the BPPs having been generated.

14. The method of claim 10, wherein the controller is further configured to:
receive, from the terminal manufacturer server, a request for information on BPP generation capability; and
transmit, to the terminal manufacturer server, information on BPP generation capability of the profile server.

15. A terminal manufacturer server for performing profile provisioning to an embedded universal integrated circuit card (eUICC), the terminal manufacturer server comprising:
a communication unit; and
a controller,
wherein the controller is configured to:
transmit, to a profile server, a providing request for a plurality of bound profile packages (BPPs);
receive, from the profile server, information on a processing time limit (comeback time) of processing of the providing request for the plurality of BPPs; and
after expiration of the processing time limit, access the profile server to receive the requested BPPs.
